# EUROPEAN PATENT SPECIFICATION

(11) **EP 1 372 396 B1**
(45) Date of publication and mention of the grant of the patent: **21.01.2009**
(21) Application number: 02727377.0
(22) Date of filing: 08.03.2002
(51) Int. Cl.: A01N 57/16

(54) **PERTICIDAL COMPOSITION**
PESTIZIDE ZUSAMMENSETZUNG
COMPOSITION PESTICIDE

(30) Priority: 21.03.2001 EP 01107001
(43) Date of publication of application: 02.01.2004
(73) Proprietor: Merial Ltd., Duluth, GA 30096-4640 (US)
(72) Inventor: HUART, Gerald, Michel, Yvon, F-69130 Ecully (FR); MARTIN, Thibaud Jean Robert, 50290 Bricqueville sur mer (FR)
(74) Representative: Clyde-Watson, Zöe
(86) International application number: PCT/EP2002/002556
(87) International publication number: WO 2002/076213

(56) References cited:
- GB-A- 1 581 277
- GB-A- 1 583 847
- US-A- 4 341 760
- US-A- 4 362 722
- CHEMICAL ABSTRACTS, vol. 132, no. 24, 12 June 2000 (2000-06-12) Columbus, Ohio, US; abstract no. 318922, YANG, YUNFEN ET AL: "Acaricide containing triazophos and chrysanthemate" XP002167174 & CN 1 217 145 A (HUAXI FARM-CHEMICALS FACTORY, CHENGDU, PEOP. REP. CHINA) 26 May 1999 (1999-05-26)

## Description

This invention relates to pesticidal compositions containing pyrethroids and organophosphate insecticides.

Mixtures of pyrethroids with organophosphates are well known, but in all commercial mixtures the ratio of organophosphate to pyrethroid is comparatively high. For instance in the product sold as Deltaphos^{®}, Aventis CropScience, which is a mixture of deltamethrin and triazophos, the ratio of triazophos to deltamethrin is at least 20:1.

An acaricidal mixture of one of the pyrethroid deltamethrin or cypermethrin with the organophosphate triazophos is described in the Chinese patent application CN-A-1,217,148, where the ratio of one of the pyrethroids to triazophos ranges from 1:32 to 1:2. Various mixtures of selected pyrethroids with chlorpyrifos are described in the veterinary field, mainly acaricidal against ticks: US-A-4,341,760 (radio of one of the pyrethroids deltamethrin and permethrin to chlorpyrifos ranges from 1:25 to 1:1), GB-A-1581277 (ratio of permethrin to chlorpyrifos ranges from 1:5 to 5:1), GB-A-1583847 (ratio of cypermethrin to chlorpyrifos ranges from 1:5 to 5:1) and US-A-4,362,722 (ratio of cyhalothrin to chlorpyrifos ranges from1:4 to -2:1),

We have now found that the ratio of organophosphate to pyrethroid can be greatly reduced to concentrations of the organophosphates which are non lethal against pests and yet synergism is still observed, especially against pyrethroid resistant insects.

Accordingly the present invention provides a pesticidal composition comprising
a) deltamethrin,
b) triazophos,
the weight ratio of component a) to component b) being from 5:1 to 1:1.

The common names quoted for these compounds are the non-proprietary common names, the chemical structure, trade names and availability of products can be found for example by reference to the "Pesticide Manual", ed.: CDS Tomlin, 12th edition, published by the British Crop Protection Council, Farnham, UK, 2000,

In addition, other pesticides may be employed in conjunction with the active ingredients described above providing they do not adversely affect the interaction between the components a) and b). For example it is sometimes useful to include additional insecticides or acaricides to extend the range of activity in order to control a wider spectrum of pests.

The combination is also-useful in overcoming reduced sensitivity by a pest to either of the individual components.

The compositions of the invention are active against a wide range of pests, especially sucking pests such as Thrips spp., e.g. T tabaci and T palmi, Homoptera, including aphids such as Megoura viciae and plant hoppers, such as Nilaparvata lugens and Nephotettix cincticeps, whiteflies, such as Trialeurodes vaporariorum and Bemisia tabaci, and Psylla spp., Heteroptera. e.g. bed bugs such as Cimex lectularius, and capsids, Lepidoptera, including Alabama argillacea, Plutella xylostella, Spodoptera spp, eg S. littoralis , Heliothis spp, Helicoverpa spp., e.g.

H. armigera and H. virescens, and Pieris brassicae; Diptera, including Musca domestica, Ceratitis capitata, Erioischia brassicae, Lucilia sericata and Aedes aegypti; Coleoptera, including Phaedon cochleariae, Anthonomus grandis, Leptinotarsa decemlineata and corn rootworms (Diabrotica spp. e.g. D. undecimpunctata); Orthoptera, including cockroaches, such as Blattella germanica; ticks, e.g. Boophilus microplus; lice, including Damalinia bovis and Linognathus vituli; as well as spider mites such as Tetranychus urticae and Panonychus ulmi.

Areas of control of the compositions of the invention imply harmful organisms selected from the group Insecta, Acarina and Nematoda in crop protection, in household, in forest, in the protection of stored products and materials, in the hygiene sector and in the domestic field.

The compositions of the invention may be employed in many forms and are often most conveniently prepared in aqueous form immediately prior to use. One method of preparing such a composition is referred to as "tank mixing" in which the ingredients in their commercially available form are mixed together by the user in a quantity of water.

In addition to e.g. tank mixing immediately prior use the compositions containing the pyrethroid and organophosphate may be formulated into a single formulation, e.g. co-formulation, which is diluted with water or other diluent before use. Such compositions may comprise a surface active agent in addition to the active ingredients and examples of such compositions are as follows.

The compositions of the invention can be either used in the customary preparations in the form of wettable powders, emulsifiable concentrates, sprayable solutions, dusting agents or granules. The compositions of the invention can be formulated in various ways, depending on what biological and/or chemicophysical parameters are prespecified. Examples of suitable formulation possibilities are: wettable powders (WP), water-soluble powders (SP), water-soluble concentrates, emulsifiable concentrates (EC), emulsions (EW), such as oil-in-water and water-in-oil emulsions, sprayable solutions, suspension concentrates (SC), dispersions on an oil or water basis, oil-miscible solutions, capsule suspensions (CS), dusting agents (DP), dressing agents, granules for broadcasting and soil application, granules (GR) in the form of microgranules, spray granules, coated granules and adsorption granules, water-dispersible granules (WG), water-soluble granules (SG), ULV formulations, microcapsules and waxes.

These individual formulation types are known in principle and are described, for example, in: Winnacker-Küchler, "Chemische Technologie" [Chemical Technology], Volume 7, C. Hanser Verlag Munich, 4th Edition 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

The necessary or applicable formulation auxiliaries such as inert materials, surfactants, solvents and other additives are also in many cases known and are described, for example, in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte" [Surface-Active Ethylene Oxide Adducts], Wiss. Verlagsgesell., Stuttgart 1976; Winnacker-Küchler, "Chemische Technologie" [Chemical Technology], Volume 7, C. Hanser Verlag Munich, 4th Edition 1986.

In addition to e.g. co-formulation or e.g. tank mixing immediately prior to use the compositions containing the pyrethroid and organophosphate may be formulated into a more concentrated primary composition which is diluted with water or other diluent before use. Such compositions may comprise a surface active agent in addition to the active ingredients and examples of such compositions are as follows.

It can be a dispersible solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent. Emulsifiable concentrates are prepared e.g. by dissolving the active ingredient in an organic solvent, e.g. butanol, cyclohexanone, dimethylformamide, xylene or alternatively relatively high-boiling aromatics or hydrocarbons or mixtures of the organic solvents with addition of one or more surfactants of ionic and/or nonionic type (emulsifiers). Examples of emulsifiers which can be used are: alkylarylsulfonic acid calcium salts such as Ca dodecylbenzenesulfonate or nonionic emulsifiers such as fatty acid polyglycol esters, alkylaryl polyglycol ethers, fatty alcohol polyglycol ethers, propylene oxide-ethylene oxide condensation products, alkyl polyethers, sorbitan esters such as, for example, sorbitan fatty acid esters or polyoxyethylene sorbitan esters such as, for example, polyoxyethylene sorbitan fatty acid esters.

A granular solid comprises the active ingredients associated with powder diluents such as kaolin, which mixture is granulated by known methods. Alternatively it comprises the active ingredients adsorbed or absorbed on a pre-granular diluent, for example Fuller's earth, attapulgite or limestone grit. Granules can usually be prepared by either spraying the active ingredient onto adsorptive granulated inert material or by applying active substance concentrates to the surface of carriers such as sand, kaolinites or of granulated inert material by means of binders, e.g. polyvinyl alcohol, sodium polyacrylate or alternatively mineral oils. Suitable active ingredient can also be granulated in the manner customary for the preparation of fertilizer granules - if desired as a mixture with fertilizers.

As a rule, water-dispersible granules are prepared by the customary processes such as spray-drying, fluidized bed granulation, disk granulation, mixing using high-speed mixers and extrusion without solid inert material. For the preparation of disk, fluidized bed, extruder and spray granules, see, for example, processes in "Spray-Drying Handbook" 3rd ed. 1979, G. Goodwin Ltd., London; J.E. Browning, "Agglomeration", Chemical and Engineering 1967, pages 147 ff; "Perry's Chemical Engineer's Handbook", 5th Ed., McGraw-Hill, New York 1973, pp. 8-57.

A dispersible or wettable powder usually comprises the active ingredients in admixture with a suitable surfactant and an inert powder diluent such as china clay. Wettable powders are preparations which are uniformly dispersible in water and which, besides the active ingredient, also contain surfactants of ionic and/or nonionic type (wetting agents, dispersants), e.g. polyoxyethylated alkylphenols, polyoxethylated fatty alcohols, polyoxethylated fatty amines, fatty alcohol polyglycol ether sulfates, alkanesulfonates, alkylbenzenesulfonates, sodium lignosulfonates, sodium 2,2'-dinaphthylmethane-6,6'-disulfonate, sodium dibutylnaphthalenesulfonate or alternatively sodium oleoylmethyltaurate in addition to a diluent or inert substance. For preparation of the wettable powders, the active ingredient is finely ground, for example, in customary equipment such as hammer mills, blowing mills and air-jet mills and simultaneously or subsequently mixed with the formulation auxiliaries.

Dusting agents are obtained by grinding the active ingredient with finely divided solid substances, e.g. talc, natural clays, such as kaolin, bentonite and pyrophyllite, or diatomaceous earth.

Suspension concentrates can be water- or oil-based. They can be prepared, for example, by wet grinding by means of commercially available bead mills and, if appropriate, addition of surfactants, such as have already been mentioned, for example, above in the case of the other formulation types.

Emulsions, e.g. oil-in-water emulsions (EW), can be prepared, for example, by means of stirrers, colloid mills and/or static mixers using aqueous organic solvents and, if appropriate, surfactants, such as have already been mentioned, for example, above in the case of the other formulation types.

For further details on the formulation of crop protection products, see, for example, G.C. Klingman, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

As a rule, crop protection preparations contain 0.1 to 99% by weight, in particular 0.1 to 95% by weight, of active ingredient.

In wettable powders, the active substance concentration is, for example, approximately 10 to 90% by weight, the remainder to 100% by weight consists of customary formulation constituents. In the case of emulsifiable concentrates, the active substance concentration can be approximately 1 to 90, preferably 5 to 80, % by weight. Formulations in the form of dusts contain 1 to 30% by weight of active substance, preferably usually 5 to 20% by weight of active substance, sprayable solutions contain approximately 0.05 to 80, preferably 2 to 50, % by weight of active substance. In the case of water-dispersible granules, the active substance content depends partly on whether the active compound is liquid or solid and which granulation auxiliaries, fillers etc. are used. In the case of water-dispersible granules, the content of active substance is, for example, between 1 and 95% by weight, preferably between 10 and 80% by weight.

In addition, said formulations of active ingredients may comprise auxiliaries such as tackifiers, binders, wetting agents, dispersants, emulsifiers, penetrants, preservatives, antifreeze agents, solvents, fillers, carriers, colorants, antifoams, evaporation inhibitors and pH and viscosity regulators which are customary in each case.

The insecticidal compositions according to the invention can be prepared by customary processes, for example by mixing the components with the aid of stirrers, shakers or (static) mixers.

Ready-to-use formulations can be obtained by preparing, for example, emulsifiable concentrates or oil dispersions of active ingredients and further auxiliaries. In the ready-to-use formulations, the amount of the active ingredients can vary within wide limits and is generally between 0.01 and 99% by weight, preferably between 0.1 and 60% by weight.

If appropriate, the formulations may comprise auxiliaries such as solvents, for example aromatic solvents, such as xylenes or mixtures of aromatic compounds from the Solvesso® series such as Solvesso® 100, Solvesso® 150 or Solvesso® 200 from Exxon; aliphatic or isoparaffinic solvents, such as products from the Exxol®-D or Isopur® series from Exxon; oils of vegetable or animal origin and derivatives thereof, such as rapeseed oils or rapeseed oil methyl esters; esters, such as butyl acetate; ethers, such as diethyl ether, THF or dioxane. The solvent content is preferably 1-95% by weight, particularly preferably 5-80% by weight. Further suitable auxiliaries are, for example, emulsifiers (preferred content: 0.1-10% by weight), dispersants (preferred content: 0.1-10% by weight) and thickeners (preferred content: 0.1-5% by weight), and, if appropriate, stabilizers, such as antifoams, water scavengers, acid scavengers and crystallization inhibitors.

Water-soluble concentrates are obtained, for example, by the active ingredients in water or a water-miscible solvent and adding, if appropriate, further auxiliaries such as water-soluble surfactants.

Another suitable concentrate is a flowable suspension concentrate which is formed by grinding the active-ingredients with water, a wetting agent and a suspending agent.

Further suitable formulations are e.g. sprayable solutions, oil- or water-based dispersions, suspo-emulsions, water-dispersible granules and/or micro-capsules.

In some circumstances it may be desirable to combine two types of formulation e.g. one of the components is present in an emulsifiable concentrate and the second component is dispersed as a powder in this concentrate.

The content of the use forms of the compositions of the invention prepared from the commercially available formulations can be from 0.00000001 up to 95 % by weight of either one or both active ingredients, preferably between 0.00001 and 90 % by weight, especially between 0.0001 and 80 % by weight.

The compositions of the invention are applied in a customary manner adapted to suit the use forms and comprises applying an effective amount of active ingredient to the pest or its locus. The application rate required for the compositions of the invention varies with, inter alia, the external conditions such as temperature, humidity and the like. It can vary within wide limits, for example between 0.0005 and 10.0 kg/ha or more of one or both active ingredients, but it is preferably between 0.0001 and 5 kg/ha, in particular 0.001 and 2 kg /ha.

The invention thus includes a method for controlling a pest, especially wherein the pest imply harmful organisms selected from the group Insecta and Acarina, which comprises applying to the pest or its locus, particularly a pest which has reduced sensitivity to synthetic pyrethroids, a pyrethroid selected from deltamethrin, and an organophosphate insecticide selected from triazophos, in a weight weight ratio of pyrethroid to organophosphate insecticide being from 5:1 to 1:1 either together or in sequence.

Besides the applications methods mentioned so far the compositions of the invention can also be introduced into the plants via subterranean or aerial plant organs (roots, stalks, leaves) when the compositions of the invention are applied to the immediate environment of the plant either in liquid or in solid form (for example granules in the case of soil application, application into paddy fields).

In addition, the compositions of the invention can be employed in a particular manner for the treatment of vegetative and generative propagation material, such as, for example, seed of, for example, cereals, vegetables, cotton, rice, sugarbeet and other crop plants and ornamentals, of bulbs, cuttings and tubers of other crop plants and ornamentals which are propagated by vegetative propagation. To this end, treatment may take place prior to sowing or the planting procedure (for example by specific seed-coating techniques, by dressing in liquid or solid form, or by the seed box treatment), during the sowing procedure or during planting, or after the sowing or planting procedure, using specific application techniques (for example row treatment). The active ingredient quantity applied may vary within a substantial range, depending on the purpose. In general, the application rates are between 1 g and 10 kg of active ingredient per hectare of soil surface.

The compositions of the invention can also be employed for controlling harmful pests in crops of known genetically modified plants, or genetically modified plants yet to be developed. As a rule, the transgenic plants are distinguished by particular, advantageous properties, for example by resistance to certain crop protection agents, resistance to plant diseases or to pathogens of plant diseases such as certain insects or microorganisms such as fungi, bacteria or viruses. Other particular properties relate to for example the harvested material with regard to quantity, quality, shelf-life, composition and specific constituents. For example, transgenic plants with an increased starch content or with an altered starch quality or those whose harvested material has a different fatty acid spectrum are known.

Preferred is the use in economically important transgenic crops of useful plants and ornamentals, for example of cereals such as wheat, barley, rye, oats, sorghum and millet, rice, cassava and maize, or else crops of sugarbeet, cotton, soya, oilseed rape, potatoes, tomatoes, peas and other vegetables.

When used in transgenic cultures, in particular those with resistances to insects, effects are frequently observed - in addition to the effects against harmful organisms which can be observed in other crops - which are specific for application in the particular transgenic crop, for example an altered, or specifically widened, spectrum of pests which can be controlled, or altered application rates which can be employed for application.

The invention therefore also relates to the use of the compositions of the invention for controlling harmful organisms in transgenic crop plants.

The invention thus includes the use of a composition comprising as component a) a pyrethroid selected from deltamethrin and comprising as component b) an organophosphate insecticide selected from triazophos and the weight ratio of component a) to component b) being from 5:1 to 1:1, for controlling pests.

The invention is illustrated in the following Example in which are described experiments in which a synergistic effect was observed..

### Example

A susceptible Helicoverpa armigera strain (BK77) was collected in Ivory Coast and reared in CIRAD Entomological Laboratory in Montpellier. Resistant H. armigera were collected as larvae from cotton crops in Konobougou area, Mali (MAL98) in 1998. Deltamethrin selected strain (BK99R) was obtained by retaining the survivors of discriminating doses (LD₉₉ or higher of the susceptible strain) applied on BK99, strain collected in Bouaké area, Ivory Coast in 1999.

Standard third-instar topical bioassays were used to determine insecticides toxicity. For mixtures of the two insecticides, technical grade products were weighted successively in ratio 1:1 and dissolved together in acetone. Five serially water-diluted concentrations were prepared. For each concentration, 24 third instars (35-45 mg) were treated with 1 µl of solution applied by microapplicator to the dorsal thorax. Each test was replicated three times. Every replicate included acetone treated control, which showed that there was less than 10% control mortality. After dosage, the test larvae were held individually at 25°C and 75% humidity. Mortality was assessed 72h after treatment. Larvae were considered dead if unable to move in a co-ordinated way when prodded with a blunt probe.

The mortality of triazophos at doses used in the mixture was estimated as shown in the following table where Mt is the mortality of triazophos alone at the dose used in the deltamethrin +triazophos mixture at ratio 1:1

| Strain | Mt at the LD₅₀ level of deltamethrin + triazophos | Mt at the LD₇₀ level of deltamethrin + triazophos | Mt at the LD₅₀ level of deltamethrin + triazophos |
|---|---|---|---|
| BK77 | 0% | 0% | 0% |
| MAL98 | 0 % | 0 % | 0 % |
| BK99R | 0 % | 0,3% | 1,4% |

Since the mortality of triazophos at doses used in the mixture were insignificant the equation of synergistic factor is consequently:
SF = LD₅₀ deltamethrin alone/LD₅₀ of the deltamethrin in the mixture.

If the SF is greater than 1 synergism is observed.

The results are shown in the following tables. In the mixtures the LD₅₀ is based on the LD₅₀ of the deltamethrin in the mixture.

### a) H armigera strain BK77

| Active ingredient | LD₅₀ (µg/g) | SF |
|---|---|---|
| Triazophos | 104.9 | |
| deltamethrin | 0.055 | |
| deltamethrin + triazophos 1:1 | 0.042 | 1,3 |

### b) H armigera strain MAL98

| Active ingredient | LD₅₀ (µg/g) | SF |
|---|---|---|
| Triazophos | 46.4 | |
| Deltamethrin | 0.903 | |
| Deltamethrin + triazophos 1:1 | 0.335 | 3 |

### c) H armigera strain BK99R

| Active ingredient | LD₅₀ (µg/g) | SF |
|---|---|---|
| Triazophos | 27.8 | |
| Deltamethrin | 10.40 | |
| Deltamethrin + triazophos 1:1 | 0.763 | 14 |

It will be seen that in all cases synergism is observed. The triazophos effectively causes no mortality at the rates used in the mixture, but in spite of this it synergises the deltamethrin. The effect is particularly pronounced against the deltamethrin resistant strain of H armigera (strain BK99R)

## Claims

1. A pesticidal composition comprising:
(a) deltamethrin;
and
(b) triazophos;
the weight ratio of component (a) to component (b) being from 5:1 to 1;1.

2. A pesticidal composition according to claim 1, wherein other pesticides are employed in conjunction with the components (a) and (b).

3. A pesticidal composition according to any of the preceding claims, which comprises surface active agent in addition to the active ingredients and further formulation auxiliaries.

4. A method for controlling a pest, which comprises applying to the pest or its locus,
(a) deltamethrin,
and
(b) triazophos.
the weight ratio of (a) to (b) being from 5:1 to 1:1,
either together or in sequence.

5. A method according to claim 4, wherein the pests are harmful organisms selected from the group Insecta and Acarina.

6. A method according to claim 4 or 5, wherein the pest has reduced sensitivity to synthetic pyrethroids.

7. The use of a composition comprising:
(a) deltamethrin,
and
(b) triazophos,
the weight ratio of component (a) to component (b) being from 5:1 to 1:1, for controlling pests.

## Patentansprüche

1. Pestizide Zusammensetzung, umfassend:
(a) Deltamethrin;
und
(b) Triazophos;
wobei das Gewichtsverhältnis von Komponente (a) zu Komponente (b) 5:1 bis 1:1 beträgt.

2. Pestizide Zusammensetzung gemäß Anspruch 1, wobei andere Pestizide in Verbindung mit den Komponenten (a) und (b) eingesetzt werden.

3. Pestizide Zusammensetzung gemäß einem der vorhergehenden Ansprüche, welche ein oberflächenaktives Mittel zusätzlich zu den Wirkstoffen und weitere Formulierungshilfsstoffe umfasst.

4. Verfahren zur Bekämpfung eines Schädlinge, welches das Anwenden von
(a) Deltamethrin
und
(b) Triazophos
wobei das Gewichtsverhältnis von (a) zu (b) 5:1 bis 1:1 beträgt,
entweder zusammen oder der Reihe nach, an dem Schädling oder seinem Ort, umfasst.

5. Verfahren gemäß Anspruch 4, wobei die Schädlinge Schadorganismen, ausgewählt aus Insekten und Milben, sind.

6. Verfahren gemäß Anspruch 4 oder 5, wobei der Schädling eine verminderte Empfindlichkeit gegenüber synthetischen Pyrethroiden aufweist.

7. Verwendung einer Zusammensetzung, umfassend:
(a) Deltamethrin
und
(b) Triazophos,
wobei das Gewichtsverhältnis von Komponente (a) zu Komponente (b) 5:1 bis 1:1 beträgt, zur Bekämpfung von Schädlingen.

## Revendications

1. Composition pesticide comprenant :
(a) de la deltaméthrine ;
et
(b) du triazophos;
le rapport en poids du composant (a) au composant (b) étant de 5:1 à 1:1.

2. Composition pesticide selon la revendication 1, dans laquelle d'autres pesticides sont employés en combinaison avec les composants (a) et (b).

3. Composition pesticide selon l'une quelconque des revendications précédentes, qui comprend un tensioactif en plus des ingrédients actifs et d'autres auxiliaires de formulation.

4. Procédé de lutte contre des nuisibles, qui comprend l'application sur les nuisibles ou sur leur lieu de vie,
(a) de deltaméthrine ;
et
(b) de triazophos ;
le rapport en poids du composant (a) au composant (b) étant de 5:1 à 1:1, conjointement ou successivement.

5. Procédé selon la revendication 4, dans lequel les nuisibles sont des organismes nocifs choisis dans le groupe des insectes et des acariens.

6. Procédé selon la revendication 4 ou 5, dans lequel les nuisibles présentent une sensibilité réduite aux pyréthroïdes synthétiques.

7. Utilisation d'une composition comprenant :
(a) de la deltaméthrine ;
et
(b) du triazophos;
le rapport en poids du composant (a) au composant (b) étant de 5:1 à 1:1, pour lutter contre des nuisibles.
